# EUROPEAN PATENT SPECIFICATION

(11) **EP 3 163 548 B1**
(45) Date of publication and mention of the grant of the patent: **17.10.2018**
(21) Application number: 16194699.1
(22) Date of filing: 19.10.2016
(51) Int. Cl.: G08B 25/14, G08B 25/10

(54) **SYNCHRONIZATION OF WIRELESSLY CONTROLLED NOTIFICATION DEVICES USING WIRELESS COMMUNICATION**
SYNCHRONISATION VON DRAHTLOS GESTEUERTEN BENACHRICHTIGUNGSVORRICHTUNGEN MITTELS DRAHTLOSER KOMMUNIKATION
SYNCHRONISATION DE DISPOSITIFS DE NOTIFICATION COMMANDÉS SANS FIL UTILISANT LA COMMUNICATION SANS FIL

(30) Priority: 29.10.2015 US 201514926246
(43) Date of publication of application: 03.05.2017
(73) Proprietor: Honeywell International Inc., Morris Plains, NJ 07950 (US)
(72) Inventor: OTIS, Jesse J., Morris Plains, NJ 07950 (US); SHARMA, Gouray, Morris Plains, NJ 07950 (US); BEREZOWSKI, Andrew G., Morris Plains, NJ 07950 (US); SHREELATHA, M, Morris Plains, NJ 07950 (US)
(74) Representative: Houghton, Mark Phillip

(56) References cited:
- US-A1- 2010 079 278
- US-A1- 2012 163 352
- US-A1- 2015 163 758

## Description

### FIELD

The field relates to fire systems and more particularly to the activation of warning devices in a fire system.

### BACKGROUND

Fire detection systems are generally known. Such systems are typically based upon the use of a number of fire detectors dispersed throughout a building and at least one warning device that warns occupants of the building to the presence of a fire. While each fire detector could be connected to its own warning device, fire detectors are typically connected to a common monitoring panel. This is useful because a local warning device connected to its own fire sensor may not be loud enough to be heard in other areas of the building. On the other hand, the use of a central monitoring panel allows all warning devices to be activated in the event of a fire in any one area. This is also useful because of the need to send notice of any detected fire to a central monitoring station.

However, the use of a common monitoring panel requires that a connection be established and maintained between the panel and each fire detector and each warning device. In the past, the connection was established by installing at least two wires between each fire detector and the monitoring panel and between each warning device and the monitoring panel.

More recent systems have relied upon the use of wireless transceivers to reduce the costs of installation. Such systems require a transceiver located in each of the fire detectors, the warning device and the central monitoring panel.

Still other systems have relied upon wireless transceivers within one or more of the sensors to relay signals from other sensors in a mesh network. While these systems work well, they often introduce delays which could lead to unacceptable behaviors, such as warning device not being synchronized. Accordingly, a need exist for better methods of controlling such systems.

Patent document number US2015/163758A1 describes a method and apparatus including a control panel sending an activate output command, a gateway of the control panel receiving the activate output command and determining a time period until a wireless communication subsystem becomes available, the wireless subsystem adjusting the determined time period by determining a time until a node is available to receive the output command through the gateway and wireless subsystem, the wireless subsystem sending the output command and a value of the adjusted determined time period to the node and the node activating an output device based upon the output command and adjusted determined time period.

The present invention in its various aspects is as set out in the appended claims.

### BRIEF DESCRIPTION OF THE DRAWINGS

FIG. 1 illustrates a block diagram of a security system in accordance herewith; and
FIG. 2 is a superframe that may be used by the system of FIG. 1.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

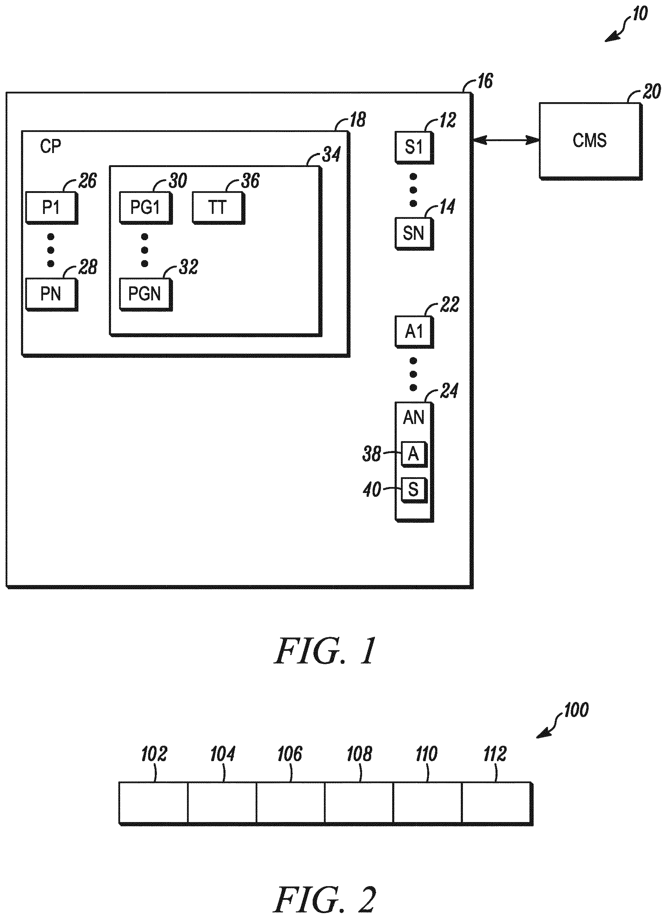

FIG. 1 is a block diagram of a security system 10 shown generally in accordance with an illustrated embodiment. Included within the security system is a number of wireless threat detectors 12, 14 that detect threats within a secured geographic area 16.

The threat detectors may be embodied in any of a number of different forms. For example, the threat detectors may be any combination of fire, smoke and/or carbon monoxide detectors.

Some other of the threat detectors may be intrusion sensors. In this case, the intrusion sensors may be switches placed on the doors or windows allowing entrance into or egress from the secured area. Other of the intrusion sensors may be passive infrared (PIR) sensors placed within an interior of the secured area to detect intruders who have been able to circumvent sensors placed along the periphery of the area. Still other of the sensors may be closed circuit television (CCTV) cameras with motion detection capability.

The threat sensors may be monitored by a control panel 18 either located within the secured area as shown in FIG. 1 or located remotely. Upon activation of one of the sensors, the control panel may send an alarm message to a central monitoring station 20. The central monitoring station may respond by summoning the appropriate help (e.g., police, fire department, etc.).

Also distributed throughout the secured area is a number of wireless warning devices (e.g., annunciators) 22, 24 that warn authorized human occupants of threats detected within the secured area.

The annunciators may each include one or more audible and/or visual warning devices. For example, the audible devices may be embodied as buzzers or speakers that emit an audible signal that warns occupants of the secured area of the detected threat. Where embodied as one or more speakers, the speakers may emit one or more words or sentences that warn occupants of the type of threat involved and/or provide specific directions to direct people to exits or provide specific verbal instructions of how to deal with the threat. Where embodied as visual devices, the annunciators may include warning lights or strobes.

In addition to sending an alarm message to the central monitoring station, the control panel may also send a wireless activation message including one or more instructions to each of the annunciators. The instructions may activate all of the annunciators or only those annunciators near the geographic location of the detected threat. The instructions may include a specific audible instruction to be delivered through each of the activated annunciators.

The outputs of the activated annunciators are each independently synchronized to the one another as described in more detail below. In this regard, synchronization of warning signals emitted by the annunciators is required under many local and national fire codes and regulations.

Included within the control panel, each of the sensors and each of the annunciators is control circuitry that accomplishes the functionality described herein. The control circuitry may include one or more processor apparatus (processors) 26, 28, each operating under control of one or more computer programs 30, 32 loaded from a non-transitory computer readable medium (memory) 34. As used herein, reference to a step of a computer program is also reference to the processor that executed that step.

In general, communication between the control panel and each the sensors and annunciators occurs within the context of a repeating superframe. Under one illustrated embodiment, the superframe includes at least one request time period, at least one silent time period and at least one response time period. Under another illustrated embodiment, the superframe includes at least one request time period and at least one response time period. Under still another illustrated embodiment, the superframe includes only request time periods. The response period is used by the control panel to send instructions to the sensors and annunciators. The request period is used by the sensors and annunciators to send requests or responses to the control panel. The silent period separates the request time period from the response period and provides processing time in order to process and respond to instructions.

FIG. 2 depicts an example of a superframe 100 that may be used by the system of FIG. 1. The superframe of FIG. 2 includes a first request period 102, a first silent period 104, a second request period 106, a second silent period 108, a response period 110 and a third silent period 112.

The repeating superframe is defined within a timing table 36 within the control panel and each of the sensors and annunciators. Under one illustrated embodiment, communication between the control panel and the sensors and annunciators occurs under a time division multiple access (TDMA) format. Accordingly, the request and response periods are each divided into a number of TDMA slots.

One or more slots may be reserved for identification and control information. For example, the one or more slots may include a beacon that synchronizes the sensors and annunciators to the superframe. The beacon may also contain an identification of the system and status information.

In event that one of the sensors or annunciators is too far from the control panel, that sensor or annunciator may register with the control panel through another of the sensors or annunciators. In this case, at least some of the sensors and/or annunciators may arrange themselves into a mesh network under a parent-child relationship. In this regard, each father node receives data from its children, and forwards such data packets along with its own information back to the control panel. Each child receives data from its fathers and forwards such data packets to its descendants. In this way, each node (sensor or annunciator) can also be considered a repeater.

Turning now to the annunciators, in specific, the control panel activates the annunciators in response to detection of a threat within the secured area. In this regard, a processor of the control panel sends an activation instruction to each annunciator to be activated via the TDMA slot assigned to the annunciator. In some cases, some (or all) of the annunciators may have an audio transducer 38 and a visual strobe 40. In this regard, the audio transducer may be controlled independently of the strobe via a specific instruction transmitted in the assigned slot of the annunciator.

In addition, the timing and content of the audible and/or visual information provided via the audible and light transducer may be defined by the content of the transmitted instruction. In the case of a verbal word warning, the verbal warning may be provided along with the transmitted instruction or may be pre-stored within the memory of the annunciator and where the location of the pre-stored instruction is identified by the transmitted instruction.

It should be noted in this regard that synchronization of the output devices (e.g., the audio transducer or strobe of an annunciator) is accomplished independently of activation instructions transmitted in the assigned slot of the annunciator. This is necessary because each annunciator may be assigned to a different slot of the superframe. It may also be important to independently synchronize the output of the annunciators delivering the same warning because other annunciators may be simultaneously delivering a different warning.

Synchronization of the output transducer of each annunciator is accomplished by a synchronization processor of each annunciator sensing the beginning of a predefined time period of the superframe and synchronizing a control signal (waveform) sent to the output device based upon that time period. Under one embodiment, the synchronization processor synchronizes the output transducer(s) to the beginning of the superframe.

An example may be offered regarding a control signal for synchronization of a strobe. In this regard, the synchronization processor of the annunciator must charge a power source of the strobe before it can fire. Accordingly, synchronization of a strobe involves the use of a waveform that first charges and then fires the strobe.

As a first example, the timing of an annunciator having a strobe and an audible horn is considered. The waveform for firing the strobe will be considered first. The example may be set in the context of a time slotted communication system and in a mesh network where not every device wakes up to talk/listen at the same time. Each annunciator is assigned to a respective slot in which they are to listen or communicate. The communication is contained in the superframe. The concept is to use the superframe timing to establish the strobe flashing times. The timing is triggered off the different states of the superframe (e.g., the silent phase 1, silent phase 2, etc.).

In the example of an annunciator having a strobe and an audible horn using a Temporal 3 pattern and a superframe length of 3.00 seconds, the waveform may be described as follows. The strobe circuitry is activated by a hi-going control signal and begins charging when the command to do so is received by the device (i.e., the annunciator is activated by an instruction from the control panel in its assigned slot). The synch pattern has the following inflection points. From the start of silent phase 1, the output to the strobe goes low at 30 milliseconds (ms). The output then goes high at 50 ms at which time the strobe fires.

In this example, the output goes low at 100 ms, but only in every fourth superframe and then high at 150 ms to restart the Temp 3 pattern. Continuing with the example, the output goes low at 1050 ms and high at 1100 ms at which time the strobe, again, fires.

A second example may be offered of the strobe with the horn silenced. In this example, the output goes low at 100 ms and high at 200 ms to fire the strobe. The output, again, goes low at 1000 ms and, then, high at 1100 ms to fire the strobe.

The second example may be continued with an offset from the second silent phase. In this case, the output goes low at 70 ms and then high at 110 ms to fire the strobe.

The advantage of the concept offered by this example is that the clock correction that is already being performed to maintain synchronization in the mesh network will naturally keep the strobes flashes synchronized from device to device. The alternative is to have multiple strobes maintain synchronization with a wired connector, or a more complex wireless solution.

Turning now to the horn, there are two modes of operation regarding the activation of the horn. The first is a direct drive of the horn pattern via an activation instruction (i.e., when the output to the horn is high, the horn is on and when the output to the horn is low, the horn is off). The second mode of operation is where a predetermined horn pattern is saved in memory (where a timer and microprocessor on the horn create a predetermined pattern based on a synchronization pulse from a processor of the annunciator that starts the pattern).

The concepts described herein apply to both modes. In general, the wireless superframe timing of the silent period used to synchronize the transition points for the horn patterns in order to ensure that all output devices in the system that are using the same pattern are in synch with each other assuming that they also have synchronization with their respective TDMA slots.

In the above examples, the pattern for "strobe with audible horn" falls into the second mode described above. The horn itself will create a predetermined "temporal 3" (temp 3) pattern, but relies on the synch pattern of the superframe to provide indication to start the pattern. In the examples above, every fourth superframe is used to restart the pattern. The superframe is 3 seconds long; so every 12 seconds, the horn pattern restarts.

In general, notification devices (i.e., annunciators) require synchronization to comply with regulatory and ADA requirements. In wired systems, the synchronization is maintained by using a wired communication connection that runs between notification devices and that carries an analog synchronization pattern. In wireless systems, the synchronization of outputs is a challenge that would otherwise require constant communication between notification devices to eliminate drift and repetitive activation commands.

The system described above, removes the need for a wired connection for synchronization, and avoids the need to have a synchronization routine that is asynchronous to the timing already being performed for instructions and to ensure notification synchronization by utilizing the communication timing structures that is pre-existing due to the wireless communication network.

The various patterns required for output notification circuits are manipulated within the allocated tolerance to fit into a repetitive sequence that is aligned with the already tightly synchronized communication protocol. For example, the rising edge of a synchronization signal of an annunciator to a strobe output that is used to trigger the strobe flash is aligned to a certain point in time in the communication routine (i.e., 20 ms after the start of a new state in the superframe).

In general, the system includes a control panel of a security system that protects a secured geographic area, a plurality of sensors that detect threats within the secured area, a plurality of annunciators within the secured area that warns human occupants of a threat within the secured area, a processor that wirelessly exchanges information with the sensors and annunciators based upon a timing table saved at least within a memory of the control panel, the timing table defining a repeating superframe having a plurality of non-overlapping time periods including at least one response period used by the control panel to transmit instructions to each of the plurality of sensors and annunciators, at least one request period used by at least some of the sensors and annunciators to transmit information to the control panel and at least one silent period, a processor of the control panel that transmits an activation message to one of the plurality of annunciators within the response period and a processor of the at least one annunciator that processes the activation message and then directly synchronizes an audio or visible output of the at least one annunciator to a subsequent one of the plurality of non-overlapping time periods.

Alternatively, the system includes a control panel of a security system that detects threats within a secured geographic area, a plurality of annunciators within the secured area that warns human occupants of a threat within the secured area, a processor of the control panel that wirelessly exchanges information with the annunciators within a repeating superframe where the superframe has a response period used by the control panel to transmit instructions to each of the plurality of annunciators, a request period used by at least some of the annunciators to transmit information to the control panel and a silent period, a processor of the control panel that transmits an activation message to one of the plurality of annunciators within the response period and a processor of the at least one annunciator that processes the activation message and then directly synchronizes an audio or visible output of the at least one annunciator to one of the plurality of non-overlapping time periods.

Alternatively, the system includes a control panel of a security system that protects a secured geographic area, a plurality of sensors within the secured area that are wirelessly coupled to the control panel and that detect threats within the secured area, a plurality of annunciators within the secured area that are wirelessly coupled to the control panel and that warn human occupants of detected threats within the secured area, a processor of the control panel that wirelessly exchanges information with the sensors and the annunciators within a repeating superframe where the superframe has a response period used by the control panel to transmit instructions to each of the plurality of sensors and to each of the plurality of annunciators, a request period used by at least some of the annunciators and sensors to transmit information to the control panel and a silent period, a processor of the control panel that transmits an activation message to one of the plurality of annunciators within the response period and a processor of the at least one annunciator that processes the activation message and then directly synchronizes an audio or visible output of the at least one annunciator to the silent time period.

From the foregoing, it will be observed that numerous variations and modifications may be effected without departing from the scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be added to, or removed from the described embodiments.

## Claims

1. An apparatus comprising:
a control panel (18) of a security system (10) that protects a secured geographic area (16);
a plurality of sensors (12, 14) that detect threats within the secured geographic area (16);
a plurality of annunciators (22, 24) within the secured geographic area (16) that send audio or visible outputs to warn of the threats within the secured geographic area (16);
a processor (26) of the control panel that wirelessly exchanges information with the plurality of sensors (12, 14) and the plurality of annunciators (22, 24) based upon a timing table (36) saved at least within a memory (34) of the control panel, wherein the timing table (36) defines a repeating superframe (100) having a plurality of non-overlapping time periods including at least one response period used by the control panel (18) to transmit instructions to each of the plurality of sensors (12, 14) and each of the plurality of annunciators (22, 24), and wherein the information includes an activation message to each of the plurality of annunciators (22, 24) within a respective slot of the at least one response period; and
a respective processor (26) of each of the plurality of annunciators (22, 24) that processes the activation message and directly synchronizes a respective one of the audio or visible outputs with other ones of the audio or visible outputs of each of the plurality of annunciators (22, 24) independently from the activation message by sensing different states of the repeating superframe (100) and initiating send of the respective one of the audio or visible outputs responsive to sensing a beginning of one of the different states of the repeating superframe.

2. The apparatus as in claim 1 wherein the different states of the repeating superframe include the at least one response period, at least one request period, and at least one silent period.

3. The apparatus as in claim 2 wherein the one of the different states of the repeating super frame is the at least one silent period.

4. The apparatus as in claim 1 wherein the respective processor of each of the plurality of annunciators skips one or more of the different states of the repeating superframe before subsequently re-synchronizing the respective one of the audio or visual outputs.

5. The apparatus as in claim 3 wherein the respective processor of each of the plurality of annunciators synchronizes the respective one of the audio or visual outputs during an integer multiple of the repeating superframe, wherein the integer multiple is greater than one.

6. The apparatus as in claim 3 wherein the one of the different states of the repeating super frame is a second silent period within the repeating superframe.

7. The apparatus as in claim 1 wherein the respective processor of each of the plurality of annunciators generates a respective waveform for the respective one of the audio or visual outputs.

8. The apparatus as in claim 2 wherein the at least one response period and the at least one request period of the repeating superframe include a plurality of time division multiplexed slots.

## Patentansprüche

1. Vorrichtung, umfassend:
ein Bedienfeld (18) eines Sicherheitssystems (10), das einen gesicherten geografischen Bereich (16) schützt;
eine Mehrzahl von Sensoren (12, 14), die Bedrohungen innerhalb des gesicherten geografischen Bereichs (16) erkennen;
eine Mehrzahl von Meldeeinrichtungen (22, 24) innerhalb des gesicherten geografischen Bereichs (16), die akustische oder sichtbare Ausgaben senden, um vor den Bedrohungen innerhalb des gesicherten geografischen Bereichs (16) zu warnen;
einen Prozessor (26) des Bedienfelds, der basierend auf einer Takttabelle (36), die zumindest in einem Speicher (34) des Bedienfeldes gespeichert ist, drahtlos Informationen mit der Mehrzahl von Sensoren (12, 14) und der Mehrzahl von Meldeeinrichtungen (22, 24) austauscht, wobei die Takttabelle (36) einen sich wiederholenden Überrahmen (100) mit einer Mehrzahl von nicht überlappenden Zeitperioden definiert, die mindestens eine Antwortperiode umfassen, die vom Bedienfeld (18) zum Senden von Anweisungen an jeden der Mehrzahl von Sensoren (12, 14) und jede der Mehrzahl von Meldeeinrichtungen (22, 24) verwendet wird, und wobei die Informationen eine Aktivierungsnachricht für jede der Meldeeinrichtungen (22, 24) innerhalb eines jeweiligen Schlitzes der mindestens einen Antwortperiode umfassen; und
einen jeweiligen Prozessor (26) einer jeden der Mehrzahl von Meldeeinrichtungen (22, 24), der die Aktivierungsnachricht verarbeitet und eine jeweilige der akustischen oder sichtbaren Ausgaben mit anderen der akustischen oder sichtbaren Ausgaben einer jeden der Mehrzahl von Meldeeinrichtungen (22, 24) unabhängig von der Aktivierungsnachricht durch Erfassen verschiedener Zustände des sich wiederholenden Überrahmens (100) und Initiieren des Sendens der jeweiligen der akustischen oder sichtbaren Ausgaben in Reaktion auf ein Erfassen eines Beginns eines der verschiedenen Zustände des sich wiederholenden Überrahmens direkt synchronisiert.

2. Vorrichtung nach Anspruch 1, wobei die verschiedenen Zustände des sich wiederholenden Überrahmens die mindestens eine Antwortperiode, mindestens eine Anforderungsperiode und mindestens eine Pausenperiode umfassen.

3. Vorrichtung nach Anspruch 2, wobei der eine der verschiedenen Zustände des sich wiederholenden Überrahmens die mindestens eine Pausenperiode ist.

4. Vorrichtung nach Anspruch 1, wobei der jeweilige Prozessor einer jeden der Mehrzahl von Meldeeinrichtungen einen oder mehrere der verschiedenen Zustände des sich wiederholenden Überrahmens vor einem anschließenden Neusynchronisieren der jeweiligen der akustischen oder optischen Ausgaben überspringt.

5. Vorrichtung nach Anspruch 3, wobei der jeweilige Prozessor einer jeden der Mehrzahl von Meldeeinrichtungen die jeweilige der akustischen oder optischen Ausgaben während einem ganzzahligen Vielfachen des sich wiederholenden Überrahmens synchronisiert, wobei das ganzzahlige Vielfache größer als eins ist.

6. Vorrichtung nach Anspruch 3, wobei der eine der verschiedenen Zustände des sich wiederholenden Überrahmens die mindestens eine Pausenperiode innerhalb des sich wiederholenden Überrahmens ist.

7. Vorrichtung nach Anspruch 1, wobei der jeweilige Prozessor einer jeden der Mehrzahl von Meldeeinrichtungen eine jeweilige Wellenform für die jeweilige der akustischen oder optischen Ausgaben generiert.

8. Vorrichtung nach Anspruch 2, wobei die mindestens eine Antwortperiode und die mindestens eine Anforderungsperiode des sich wiederholenden Überrahmens eine Mehrzahl von Zeitmultiplexschlitzen umfassen.

## Revendications

1. Appareil, comprenant :
un panneau de commande (18) d'un système de sécurité (10) qui protège une zone géographique sécurisée (16) ;
une pluralité de capteurs (12, 14) qui détecte des menaces au sein de la zone géographique sécurisée (16) ;
une pluralité d'annonciateurs (22, 24) au sein de la zone géographique sécurisée (16) qui transmettent des sorties sonores ou visibles pour avertir des menaces au sein de la zone géographique sécurisée (16) ;
un processeur (26) du panneau de commande qui échange sans fil des informations avec la pluralité de capteurs (12, 14) et la pluralité d'annonciateurs (22, 24) sur la base d'une table de rythme (36) enregistrée au moins dans une mémoire (34) du panneau de commande, la table de rythme (36) définissant une supertrame répétitive (100) comprenant une pluralité de périodes de temps disjointes comportant au moins une période de réponse utilisée par le panneau de commande (18) pour émettre des instructions à destination de chacun de la pluralité de capteurs (12, 14) et chacun de la pluralité d'annonciateurs (22, 24), et les informations comportant un message d'activation vers chacun de la pluralité d'annonciateurs (22, 24) au sein d'un créneau respectif de l'au moins une période de réponse ; et
un processeur respectif (26) de chacun de la pluralité d'annonciateurs (22, 24) qui traite le message d'activation et synchronise directement une sortie respective parmi les sorties sonores ou visibles avec d'autres sorties parmi les sorties sonores ou visibles de chacun de la pluralité d'annonciateurs (22, 24) indépendamment du message d'activation en détectant des états différents de la supertrame répétitive (100) et en déclenchant la transmission de la sortie respective parmi les sorties sonores ou visibles en réponse à la détection d'un début d'un des états différents de la supertrame répétitive.

2. Appareil selon la revendication 1, dans lequel les états différents de la supertrame répétitive comportent l'au moins une période de réponse, au moins une période de requête et au moins une période de silence.

3. Appareil selon la revendication 2, dans lequel ledit un des états différents de la supertrame répétitive est l'au moins une période de silence.

4. Appareil selon la revendication 1, dans lequel le processeur respectif de chacun de la pluralité d'annonciateurs saute un ou plusieurs des états différents de la supertrame répétitive avant de resynchroniser ensuite la sortie respective parmi les sorties sonores ou visuelles.

5. Appareil selon la revendication 3, dans lequel le processeur respectif de chacun de la pluralité d'annonciateurs synchronise la sortie respective parmi les sorties sonores ou visuelles au cours d'un multiple entier de la supertrame répétitive, le multiple entier étant supérieur à un.

6. Appareil selon la revendication 3, dans lequel ledit un des états différents de la supertrame répétitive est une deuxième période de silence au sein de la supertrame répétitive.

7. Appareil selon la revendication 1, dans lequel le processeur respectif de chacun de la pluralité d'annonciateurs génère une forme d'onde respective pour la sortie respective parmi les sorties sonores ou visuelles.

8. Appareil selon la revendication 2, dans lequel l'au moins une période de silence et l'au moins une période de requête de la supertrame répétitive comportent une pluralité de créneaux multiplexés par répartition dans le temps.
